# EUROPEAN PATENT APPLICATION

(11) **EP 4 711 332 A1**
(43) Date of publication of application: **18.03.2026**
(21) Application number: 24819601.6
(22) Date of filing: 07.06.2024
(51) Int. Cl.: C01B 32/168, H01J 35/06, H01J 35/10, H01J 35/14, H01J 9/14

(54) **ELECTRON EMITTER COMPRISING DENSIFIED CARBON STRUCTURE-BASED FILM, METHOD FOR MANUFACTURING SAME, AND X-RAY TUBE USING SAME**

(30) Priority: 09.06.2023 KR 20230074003
(71) Applicant: LMX Co., Ltd., Seoul 02841 (KR)
(72) Inventor: GO, Hanbin, Seongnam-si Gyeonggi-do 13441 (KR); LEE, Hyunjea, Seoul 02830 (KR)
(74) Representative: Manitz Finsterwald Patent- und Rechtsanwaltspartnerschaft mbB
(86) International application number: PCT/KR2024/007783
(87) International publication number: WO 2024/253450

(57) **Abstract**

The present application relates to a method for manufacturing a densified carbon structure-based film, the method comprising: a step for providing a carbon structure-based film; and a carbon structure-based film densification step for obtaining a densified carbon structure-based film by immersing the carbon structure-based film in a polar solvent and then in an acidic aqueous solution, or obtaining a densified carbon structure-based film by immersing the carbon structure-based film in an acidic aqueous solution and then in a polar solvent.

## Description

### BACKGROUND

### Field

The present disclosure relates to an electron emission source including a high-density carbon structure-based film, a method of manufacturing the same, and an X-ray tube using the same.

In general, a cold cathode X-ray source applies a voltage to a gate electrode to extract an electron beam from a carbon nanotube electron emitter, and the extracted electron beam is densely focused through a focusing electrode and guided toward an anode electrode. When a high voltage is applied between a cathode electrode and the anode electrode, electrons are accelerated toward the anode electrode and strongly collide with the anode electrode, thereby generating X-rays from the anode electrode.

In conventional cold cathode electron emission, carbon nanotubes are mainly used as electron emitters. The carbon nanotubes are mixed with a conductive organic material to form a paste, which is then used to fabricate the electron emitter. However, such carbon nanotube paste electron emitters may become contaminated with unwanted organic substances during the fabrication process, and it is very difficult to align the carbon nanotubes in a vertical direction. In addition, the carbon nanotube paste electron emitters have a problem in that the field emission characteristics are significantly degraded due to ionization of gas molecules generated by residual organic materials remaining in the paste during operation, and the lifetime of the carbon nanotubes emitting electrons is shortened.

Furthermore, in a conventional cold cathode X-ray source, a gate electrode is typically formed of a metal mesh or metal hole structure, which causes a problem of reduced electron transmission efficiency through the gate electrode. In contrast, the present invention proposes a method for improving the electron transmission efficiency by using a gate electrode having a narrow slit shape.

In this regard, Korean Patent Registration No. 10-1239395 (Title of Invention: Field Emission Source, Device Applying the Same, and Method for Manufacturing the Same) discloses a field emission source having a stable electron-emitting material support structure, a field emission device applying the same, and a method for manufacturing the same.

### SUMMARY

The present disclosure relates to an electron emission source including a high-density carbon structure-based film, a method of manufacturing the same, and an X-ray source using the same.

The present invention has been made to solve the problems of the related art described above. Some embodiments of the present invention are intended to provide an electron emission source in which a carbon structure-based film used as the electron emitter is densified to increase the stability of the carbon structure-based film and to improve electron emission performance, as well as to provide a method of manufacturing the same and an X-ray source using the same.

In addition, an object of the present invention is to provide an X-ray source capable of improving the electron beam transmission efficiency by using a gate electrode having a slit shape.

However, the problems to be solved by the present invention are not limited to the ones described above, and other problems not mentioned herein will be clearly understood by those skilled in the art from the following description.

According to a first aspect of the present disclosure, there is provided a method of manufacturing a densified carbon structure-based film, the method comprising: a step of providing a carbon structure-based film; and a step of densifying the carbon structure-based film by immersing the carbon structure-based film in a polar solvent and then immersing it in an acidic aqueous solution to obtain a densified carbon structure-based film, or immersing the carbon structure-based film in an acidic aqueous solution and then immersing it in a polar solvent to obtain the densified carbon structure-based film.

According to a second aspect of the present disclosure, there is provided a densified carbon structure-based film manufactured according to the above-described method, the film being obtained by: a step of providing a carbon structure-based film; and a step of densifying the carbon structure-based film by immersing the carbon structure-based film in a polar solvent and then in an acidic aqueous solution, or immersing the carbon structure-based film in an acidic aqueous solution and then in a polar solvent to obtain the densified carbon structure-based film.

According to a third aspect of the present disclosure, there is provided a method of manufacturing a carbon structure-based electron emission source, the method comprising: a step of providing a carbon structure-based film; a step of densifying the carbon structure-based film by immersing the carbon structure-based film in a polar solvent and then immersing it in an acidic aqueous solution to obtain a densified carbon structure-based film, or immersing the carbon structure-based film in an acidic aqueous solution and then immersing it in a polar solvent to obtain the densified carbon structure-based film; and fixing the carbon structure-based film positioned between at least two conductive metal members by applying lateral pressure.

According to a fourth aspect of the present disclosure, there is provided an X-ray tube comprising: a tube housing having an internal space; a cathode accommodated within the tube housing and disposed at one end thereof; and an anode accommodated within the tube housing and disposed at the other end thereof so as to face the cathode, wherein the cathode comprises: a substrate; a carbon structure-based electron emission source disposed on the substrate and having a linearly cut carbon structure-based film; a gate electrode having a slit formed therein to expose the carbon structure-based electron emission source; and a focusing lens disposed between the gate electrode and the anode.

According to the method of manufacturing the carbon structure-based electron emission source among the aforementioned means for solving the problem, it is possible to achieve a strong bonding force within the nanomaterial itself and a strong adhesion between the nanomaterial thin-film emitter and the cathode electrode, even without using a paste or other adhesive containing organic materials. Accordingly, unlike nanomaterials using pastes or adhesives containing organic components, the present invention can eliminate various electrical arcing phenomena and instabilities caused by ion generation from the organic substances, thereby enabling the manufacture of an X-ray source having high field emission efficiency and excellent lifetime characteristics.

In addition, by using a slit-shaped gate electrode having a narrow gap among the aforementioned means for solving the problem, the transmission efficiency of an electron beam through the gate electrode can be increased, and the focusing effect of the electron beam on the anode electrode can be enhanced.

### BRIEF DESCRIPTION OF THE DRAWINGS

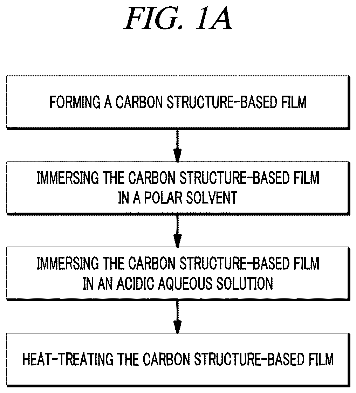

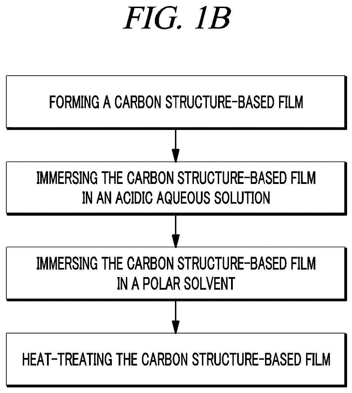

FIGS. 1A and 1B are flowcharts illustrating methods for manufacturing a densified carbon structure-based film according to embodiments of the present disclosure.
FIG. 2 is a schematic diagram illustrating a principle of densifying a carbon nanotube film by immersing the carbon nanotube film in an acidic aqueous solution according to an embodiment of the present disclosure.
FIG. 3 is a schematic diagram illustrating a principle of densifying a carbon nanotube film by immersing the carbon nanotube film in a polar solvent according to an embodiment of the present disclosure.
FIG. 4 is a schematic diagram illustrating a principle of densifying a carbon nanotube film by immersing the carbon nanotube film in a solvent containing a benzene ring according to an embodiment of the present disclosure.
FIG. 5 is a cross-sectional view illustrating an X-ray tube using a carbon structure-based electron emission source according to an embodiment of the present invention.
FIGS. 6 and 7 are diagrams illustrating carbon structure-based electron emission sources according to an embodiment of the present invention.
FIG. 8 is a diagram illustrating a photograph of an X-ray tube fabricated according to an embodiment of the present invention.
FIGS. 9(a) and 9(b) are diagrams illustrating a focusing lens according to an embodiment of the present invention.
FIGS. 10(a) to 10(h) illustrate electron beam trajectories (a-b), electron beam focusing (c), focusing lens shapes (d), and voltage distributions (e-h) according to the shapes of focusing lenses in an embodiment of the present invention.
FIGS. 11(a) to 11(h) illustrate electron beam trajectories (a-b), electron beam focusing (c), focusing lens shapes (d), and voltage distributions (e-h) according to the shapes of focusing lenses in another embodiment of the present invention.
FIG. 12 is a diagram illustrating operating characteristics of a cold cathode X-ray tube according to an embodiment of the present invention.
FIGS. 13 to 15 are diagrams illustrating X-ray tubes using carbon structure-based electron emission sources according to another embodiment of the present invention.
FIGS. 16 to 18 are diagrams illustrating detailed configurations of an X-ray tube according to an embodiment of the present invention.
FIGS. 19 to 23 are diagrams illustrating detailed configurations of a cathode according to an embodiment of the present invention.
FIGS. 24 to 26 are diagrams illustrating detailed configurations of a cathode according to another embodiment of the present invention.
FIG. 27 is a diagram illustrating an electrode pin coupling structure in an X-ray tube according to an embodiment of the present invention.
FIG. 28 is a diagram illustrating an X-ray tube according to another embodiment of the present invention.
FIG. 29 is a diagram illustrating an electrode pin coupling structure in an X-ray tube according to another embodiment of the present invention.
FIG. 30 is a photograph showing test results of X-ray image outputs of an X-ray tube according to an embodiment of the present invention.
FIGS. 31(a) and 31(b) are schematic diagrams illustrating a principle of a two-step densification process for a carbon nanotube film according to an embodiment of the present invention.
FIGS. 32(a) to 32(d) are scanning electron microscope (SEM) images respectively showing the cross-sectional thicknesses of: a carbon nanotube film without a densification process; a carbon nanotube film densified using a polar solvent (ethylene carbonate); a carbon nanotube film densified using an acidic aqueous solution (acetic acid); and a carbon nanotube film densified using a polar solvent (ethylene carbonate, first step) and an acidic aqueous solution (acetic acid, 5 M, second step).
FIGS. 33 to 36 are graphs respectively illustrating triode field electron emission characteristics of carbon nanotube thin-film emitters fabricated using: a carbon nanotube film without a densification process; a carbon nanotube film densified using a polar solvent (ethylene carbonate); a carbon nanotube film densified using an acidic aqueous solution (acetic acid); and a carbon nanotube film densified using a polar solvent (ethylene carbonate, first step) and an acidic aqueous solution (acetic acid, 5 M, second step).
FIG. 37 is a table comparing triode field electron emission characteristics of carbon nanotube thin-film emitters fabricated using: a carbon nanotube film without a densification process; a carbon nanotube film densified using a polar solvent (ethylene carbonate); a carbon nanotube film densified using an acidic aqueous solution (acetic acid); and a carbon nanotube film densified using a polar solvent (ethylene carbonate, first step) and an acidic aqueous solution (acetic acid, 5 M, second step).

### DETAILED DESCRIPTION

Hereinafter, exemplary embodiments and examples of the present disclosure will be described in detail with reference to the accompanying drawings so that those skilled in the art can easily carry out the invention. However, the present disclosure may be embodied in various different forms and is not limited to the embodiments and examples described herein. In the drawings, portions irrelevant to the description are omitted for clarity, and like reference numerals denote like elements throughout the specification.

Throughout the specification, when a certain part is referred to as being "connected to" another part, this includes not only cases where the parts are "directly connected" to each other but also cases where they are "electrically connected" through other components interposed therebetween.

Throughout the specification, when a certain element is described as being "on" another element, this includes not only cases where the element is in contact with the other element but also cases where another element is interposed therebetween.

Throughout the specification, when a certain portion is described as "including" a component, unless otherwise stated, this does not exclude the presence of other components but rather means that other components may be further included.

The terms of degree such as "about" and "substantially," as used herein, are intended to indicate allowable manufacturing and material tolerances in the described numerical values, and to prevent the disclosure from being unfairly used by an unscrupulous infringer attempting to take advantage of an exact or absolute value for understanding convenience.

Throughout the specification, the expressions "a step of~" or "the step of~" do not mean "a step for~."

Throughout the specification, the term "combinations thereof," included in Markush-type expressions, refers to one or more mixtures or combinations selected from the group consisting of the listed components, and means that one or more selected components from the group may be included.

Throughout the specification, the expression "A and/or B" means "A or B, or both A and B."

Throughout the specification, the terms "film," "thin film," and "layer" may be used interchangeably.

Throughout the specification, the terms "densification" and "high densification" may both refer to an increase in the density of a carbon structure-based film.

Although embodiments of the present disclosure have been described in detail above, it should be understood that the scope of the invention is not limited thereto.

According to a first aspect of the present disclosure, there is provided a method of manufacturing a densified carbon structure-based film, the method comprising: a step of providing a carbon structure-based film; and a step of densifying the carbon structure-based film by immersing the carbon structure-based film in a polar solvent and then immersing it in an acidic aqueous solution to obtain a densified carbon structure-based film, or immersing the carbon structure-based film in an acidic aqueous solution and then immersing it in a polar solvent to obtain the densified carbon structure-based film.

In one embodiment of the present disclosure, the step of obtaining the densified carbon structure-based film may be performed in the following sequence:
(1) a first step of densifying immersing the carbon structure-based film in a polar solvent to obtain a primary densified carbon structure-based film, and a second step of densifying immersing the primary densified carbon structure-based film in an acidic aqueous solution to obtain a secondary densified carbon structure-based film; or
(2) a first step of densifying immersing the carbon structure-based film in an acidic aqueous solution to obtain a primary densified carbon structure-based film, and a second step of densifying immersing the primary densified carbon structure-based film in a polar solvent to obtain a secondary densified carbon structure-based film.

When the carbon structure-based film is first immersed in the acidic aqueous solution and subsequently in the polar solvent, the effect of the subsequent densification step performed using the polar solvent may be relatively reduced due to ionization of the surface of the carbon structure-based film caused by the acidic aqueous solution. Therefore, performing the process by first immersing the carbon structure-based film in the polar solvent and then immersing it in the acidic aqueous solution can provide a more superior densification effect.

In one embodiment of the present disclosure, the densification process of the carbon structure-based film may include immersing the carbon structure-based film in an acidic aqueous solution, subsequently immersing it in a polar solvent, and then washing it with deionized water and drying it.

In another embodiment of the present disclosure, the densification process of the carbon structure-based film may include immersing the carbon structure-based film in a polar solvent, subsequently immersing it in an acidic aqueous solution, and then washing it with deionized water and drying it.

In one embodiment of the present disclosure, the carbon structure may include one or more selected from the group consisting of carbon nanotubes, graphene, nanocarbon, and carbon nanowires. In one embodiment of the present disclosure, the carbon structure may be a carbon nanotube. The carbon nanotube may include one or more selected from the group consisting of a single-walled carbon nanotube, a double-walled carbon nanotube, and a multi-walled carbon nanotube.

In one embodiment of the present disclosure, the polar solvent may be a non-protic solvent.

In one embodiment of the present disclosure, the dipole moment of the polar solvent may be about 2 D or more, or about 2.2 D or more.

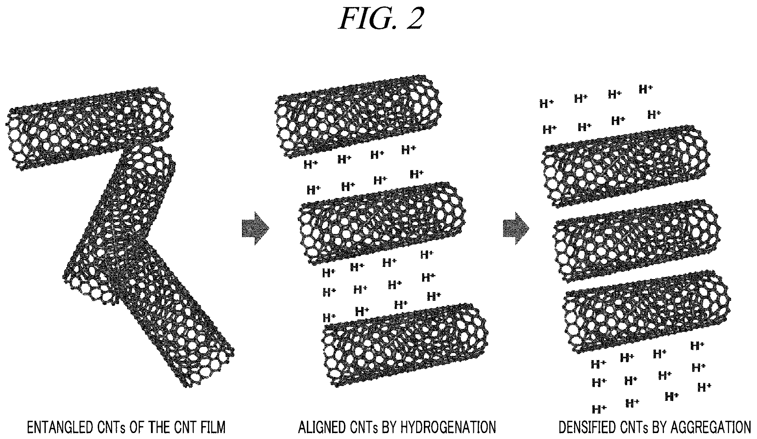

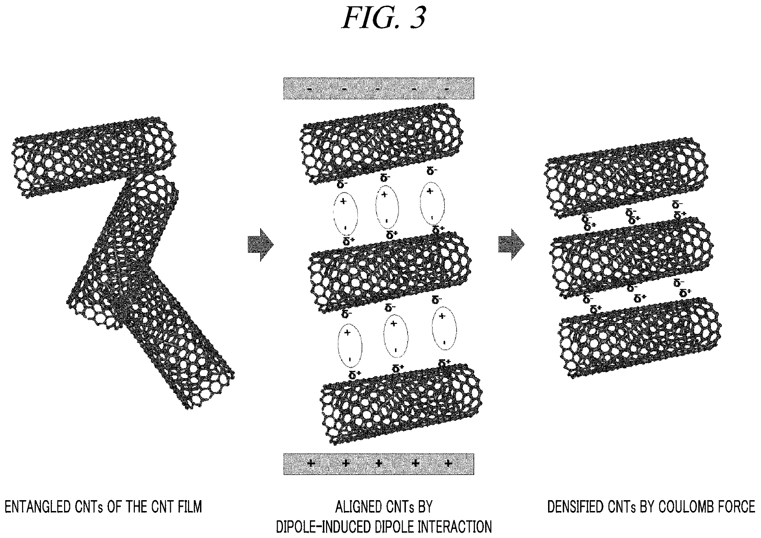

In one embodiment of the present disclosure, the step of densifying the carbon structure-based film is required to manufacture a stable carbon structure-based film. The carbon structure-based film has a structure in which an innumerable number of carbon structures are bonded to each other by van der Waals forces. The strength of the van der Waals force acting between different carbon structures increases as the distance between the carbon structures decreases. Therefore, in order to manufacture a stable carbon structure-based film, a densification process that reduces the distance between individual carbon structures is essential. Three major methods may be used to reduce the distance between the individual carbon structures:
(1) Densification of the carbon structure-based film (particularly, a carbon nanotube film) through direct protonation
   Referring to FIG. 2, when the carbon structure-based film is immersed in an acidic aqueous solution, a hydrogenation phenomenon may occur in which hydrogen ions are bonded to the surface of the individual carbon structures. When hydrogen ions are bonded to the surface of the carbon structures, the hydrogen ions temporarily weaken the van der Waals forces acting between the carbon structures, thereby rearranging the carbon structures within the thin film. Subsequently, during the washing process, the hydrogen ions are rapidly removed, and due to the difference in hydrogen ion concentration, the carbon structure-based film contracts, thereby achieving densification of the film. In this case, water molecules present in the aqueous solution may combine with hydrogen ions to form H₃ O⁺, which hinders hydrogenation of the carbon structures. Therefore, as the pH of the acidic aqueous solution decreases, the number of hydrogen ions increases, and the hydrogenation phenomenon can occur more readily. In addition, when the carbon structures have a greater number of defects on their outer walls, the bonding of hydrogen ions can occur more easily, thereby facilitating the hydrogenation process.
(2) Densification of the carbon structure-based film (particularly, a carbon nanotube film) by dipole-induced dipole attraction
   Referring to FIG. 3, when the carbon structure-based film is immersed in a polar solvent, an induced dipole may be formed on the surface of the carbon structures by the polar solvent molecules. When a voltage is applied, the polar molecules may be aligned in a specific direction, forming a uniform induced dipole on the surface of the carbon structure-based film. Subsequently, as the polar molecules are removed during the washing process, densification of the carbon structure-based film may occur due to the induced dipole attraction. Accordingly, when densifying the carbon structure-based film using a polar solvent, the polar solvent preferably has a high dipole moment value and a low surface tension value to facilitate penetration of the polar molecules into the film. For example, polar protic solvents capable of forming hydrogen bonds generally have high surface tension values, making it difficult for them to uniformly penetrate into a carbon nanotube-based film, resulting in limited densification effects. Therefore, a polar aprotic solvent is more suitable.
(3) Densification of the carbon structure-based film (particularly, a carbon nanotube film) through π-π interaction

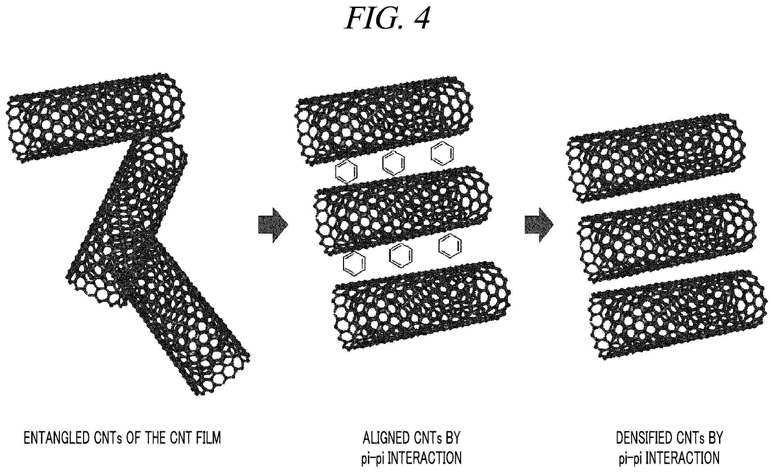

Referring to FIG. 4, in a substance having a benzene ring, electrons in the p-orbital of the benzene ring interact with electrons in the p-orbitals of the carbon structures to form π-π interactions. Due to these π-π interactions, the distance between the carbon structures within the carbon structure-based film becomes shorter, resulting in densification of the carbon structure-based film. In this case as well, the surface tension value of the solution should be low.

Accordingly, as described above, selecting an appropriate solvent used for the densification of the carbon structure-based film is highly important. It is preferable to use a combination of a polar aprotic solvent having a high dipole moment and low surface tension (due to the absence of hydrogen bonding) together with an acidic aqueous solution capable of generating a large number of hydrogen ions through ionization of many molecules in an aqueous state.

Specifically, in the step of obtaining the densified carbon structure-based film according to the present disclosure, the polar solvent may be determined in consideration of having a relatively high dipole moment and low surface tension due to the absence of hydrogen bonding.

**Table 1**

| Solvent | Surface Tension (N/m) | Dipole Moment (Debye) |
|---|---|---|
| Pyridine | 0.038 N/m | 2.2 D |
| Acetone | 0.0245 N/m | 3.0 D |
| Acetonitrile | 0.0278 N/m | 3.4 D |
| Dimethyl sulfoxide (DMSO) | 0.0435 N/m | 3.9 D |
| Ethylene carbonate | - | 4.9 D |
| Propylene carbonate | - | 5.0 D |
| Hexamethylphosphoramide (HMPA) | 0.0344 N/m | 5.5 D |

In addition, in the step of obtaining the densified carbon structure-based film according to the present disclosure, the acidic aqueous solution used may be determined in consideration of the following factors: (1) As the acidic aqueous solution, a strong acid aqueous solution capable of ionizing most molecules in an aqueous state to generate a large amount of hydrogen ions may be used. However, as the molar concentration of the strong acid aqueous solution increases, the crystallinity of the carbon structures may deteriorate. Therefore, it is important to control the concentration to an appropriate level.

(2) As the acidic aqueous solution, a weak aliphatic carboxylic acid having polarity may also be used. In an aqueous state, a portion of the aliphatic carboxylic acid is ionized to generate hydrogen ions, while the remaining non-ionized carboxylic acid molecules exist as polar molecules. Thus, both the densification effect caused by the hydrogen ions and the densification effect caused by the polar molecules can be simultaneously obtained. For example, a 5 M acetic acid aqueous solution generates hydrogen ions at approximately pH 2. In addition, acetic acid has a very low surface tension of about 0.027 N/m and a dipole moment of approximately 1.7 D, which enables effective penetration into the carbon nanotube film, thereby inducing densification of the film.

(3) In the case of aromatic carboxylic acids, they are weak acids and polar, while also containing a benzene ring. That is, in an aqueous state, a portion of the aromatic carboxylic acid is ionized to generate hydrogen ions, and the remaining non-ionized carboxylic acid molecules exist as polar molecules having benzene rings. Therefore, aromatic carboxylic acids can provide all three effects simultaneously: densification of the carbon structure-based film caused by hydrogen ions, densification caused by polar molecules, and densification caused by π-π interaction. However, because aromatic carboxylic acids have benzene rings, the maximum molar concentration at which they can exist in an aqueous state is limited. For example, salicylic acid can be dissolved in water up to about 0.45 M under temperature conditions of 95°C.

**Table 2**

| Category | Type | pKa | Dipole Moment (Debye) |
|---|---|---|---|
| Strong acid | Hydrochloric acid | 7 | - |
| | Nitric acid | -1.3 | - |
| Aliphatic carboxylic acid | Acetic acid | -4.76 | 1.71 D |
| | Formic acid | -3.80 | 1.41 D |
| Aromatic carboxylic acid | Salicylic acid | -2.97 | 2.65 D |
| | Benzoic acid | -4.19 | 1.72 D |

In one embodiment of the present disclosure, the polar solvent may include one or more selected from the group consisting of heteroaromatic compounds, ketones, carbonates, ethers, esters, acetonitrile, dimethyl sulfoxide (DMSO), N,N-dimethylformamide (DMF), N-methyl-2-pyrrolidone (NMP), N,N'-dimethylacetamide (DMAc), and hexamethylphosphoramide (HMPA), but is not limited thereto. For example, the polar solvent may include one or more selected from the group consisting of pyridine, acetone, ethylene carbonate, propylene carbonate, tetrahydrofuran (THF), methyl acetate, ethyl acetate, acetonitrile, dimethyl sulfoxide (DMSO), N,N-dimethylformamide (DMF), N-methyl-2-pyrrolidone (NMP), N,N'-dimethylacetamide (DMAc), and hexamethylphosphoramide (HMPA). In one embodiment of the present disclosure, the acidic aqueous solution may include one or more selected from the group consisting of hydrochloric acid, nitric acid, sulfuric acid, acetic acid, formic acid, salicylic acid, and benzoic acid. In one embodiment, the acidic aqueous solution may be acetic acid.

In one embodiment of the present disclosure, the concentration of the acidic aqueous solution may be optimized depending on the type of acid used. The concentration of the acidic aqueous solution may be about 0.1 M to about 10 M. For example, the concentration may be about 0.1 M to about 10 M, about 0.1 M to about 8 M, or about 0.1 M to about 5 M. By way of non-limiting examples, when a strong inorganic acid such as nitric acid, hydrochloric acid, or sulfuric acid is used as the acidic aqueous solution, a concentration of about 3 M may be preferable. When an aliphatic carboxylic acid such as acetic acid or formic acid is used, a concentration of about 5 M may be preferable. When an aromatic carboxylic acid such as salicylic acid or benzoic acid is used, a concentration of about 0.4 M to about 0.5 M, or about 0.45 M, may be preferable.

In one embodiment of the present disclosure, the carbon structure-based film may be manufactured by a process comprising: mixing distilled water, sodium dodecyl sulfate (SDS), and carbon structures to form a dispersion; and filtering the mixed solution through an anodic aluminum oxide (AAO) membrane to form a film and drying it. The carbon structures may include one or more selected from the group consisting of carbon nanotubes, graphene, nanocarbon, and carbon nanowires. In one embodiment, the carbon structure may be a carbon nanotube. The carbon nanotube may include one or more selected from the group consisting of single-walled carbon nanotubes, double-walled carbon nanotubes, and multi-walled carbon nanotubes.

For example, SDS and carbon nanotubes may be mixed with distilled water and ultrasonically dispersed for about 50 to about 65 minutes to form a mixed solution, which is then centrifuged for about 40 minutes. Subsequently, the mixed solution is filtered through the AAO membrane so that only the distilled water passes through while the carbon nanotubes are deposited and stacked on the AAO membrane. The carbon nanotubes are strongly entangled with each other by van der Waals forces, and then the AAO membrane is removed using a sodium hydroxide solution or a carbon nanotube dispersion (CNT solution), thereby forming a carbon nanotube film.

In one embodiment of the present disclosure, the method of manufacturing the densified carbon structure-based film may further include a pretreatment step of removing a dispersant present in the provided carbon structure-based film. Here, the dispersant may be sodium dodecyl sulfate (SDS). In one embodiment of the present disclosure, the dispersant may be a dispersant that can be removed by washing with one or more solvents selected from ketones, alcohols, and water. The ketones may include acetone, methyl ethyl ketone, diethyl ketone, methyl propyl ketone, ethyl propyl ketone, or dipropyl ketone, and the alcohols may include methanol, ethanol, propyl alcohol, isopropyl alcohol, butanol, pentanol, or hexanol. For example, the dispersant may be removed by washing with acetone or isopropyl alcohol.

In one embodiment of the present disclosure, the process of removing the dispersant may be performed by: (1) sequentially flowing acetone, isopropyl alcohol, and deionized water through the carbon structure-based film during a vacuum filtration process to remove the dispersant inside the carbon structure-based film; or (2) detaching the carbon structure-based film from the membrane and sequentially immersing the carbon structure-based film in deionized water and acetone to remove the dispersant.

In one embodiment of the present disclosure, one or more heat treatment steps may be further included before, after, or both before and after the step of densifying the carbon structure-based film. The heat treatment may remove residual solvent remaining in the carbon structure-based film.

In one embodiment of the present disclosure, the heat treatment step may be performed under an atmospheric environment or an inert gas (for example, argon) environment.

In one embodiment of the present disclosure, the heat treatment step may be performed within a temperature range of about 100°C to about 500°C, about 100°C to about 400°C, about 100°C to about 300°C, about 200°C to about 500°C, about 200°C to about 400°C, or about 200°C to about 300°C.

According to a second aspect of the present disclosure, there is provided a densified carbon structure-based film manufactured by a method comprising: a step of providing a carbon structure-based film; and a step of densifying the carbon structure-based film by immersing the carbon structure-based film in a polar solvent and then immersing it in an acidic aqueous solution to obtain a densified carbon structure-based film, or immersing the carbon structure-based film in an acidic aqueous solution and then immersing it in a polar solvent to obtain the densified carbon structure-based film.

Although detailed descriptions overlapping with those of the first aspect have been omitted, the content described with respect to the first aspect may be equally applied to the second aspect even if not explicitly stated herein.

In one embodiment of the present disclosure, the thickness of the densified carbon structure-based film may decrease by about 20% or more, or about 30% or more, compared to the thickness of the carbon structure-based film before densification.

In one embodiment of the present disclosure, the anode current of the densified carbon structure-based film may increase by about 25 mA or more, about 30 mA or more, or about 40 mA or more compared to the anode current of the carbon structure-based film before densification.

According to a third aspect of the present disclosure, there is provided a method of manufacturing a carbon structure-based electron emission source, the method comprising: a step of providing a carbon structure-based film; a step of densifying the carbon structure-based film by immersing the carbon structure-based film in a polar solvent and then immersing it in an acidic aqueous solution to obtain a densified carbon structure-based film, or immersing the carbon structure-based film in an acidic aqueous solution and then immersing it in a polar solvent to obtain the densified carbon structure-based film; and fixing the carbon structure-based film positioned between at least two conductive metal members by applying a lateral pressure.

Although detailed descriptions overlapping with those of the first and second aspects have been omitted, the content described with respect to the first and second aspects may be equally applied to the third aspect even if not explicitly stated herein.

In one embodiment of the present disclosure, the method of manufacturing the carbon structure-based electron emission source may further include cutting the carbon structure-based film before or after the step of densifying the carbon structure-based film.

In one embodiment of the present disclosure, in the step of fixing the carbon structure-based film, the fixing may include securing the cut surface of the carbon structure-based film facing upward.

According to a fourth aspect of the present disclosure, there is provided an X-ray tube comprising: a tube housing having an internal space; a cathode accommodated within the tube housing and disposed at one end thereof, the cathode having a carbon structure-based film linearly cut and coupled as an electron emission source; a gate electrode disposed above the cathode and having a slit formed therein so as to be aligned with the carbon structure-based film; a focusing lens disposed above the gate electrode; and an anode accommodated within the tube housing and disposed at the other end of the tube housing so as to face the cathode.

Although detailed descriptions overlapping with those of the first through third aspects have been omitted, the content described with respect to the first through third aspects may be equally applied to the fourth aspect even if not explicitly stated herein.

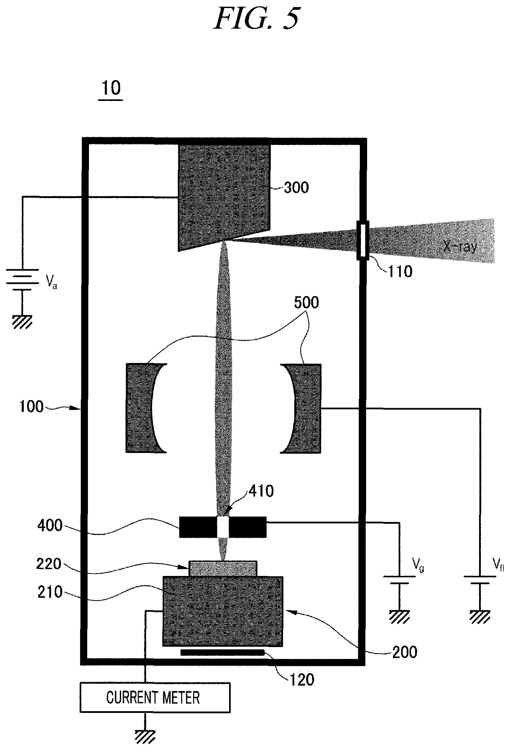

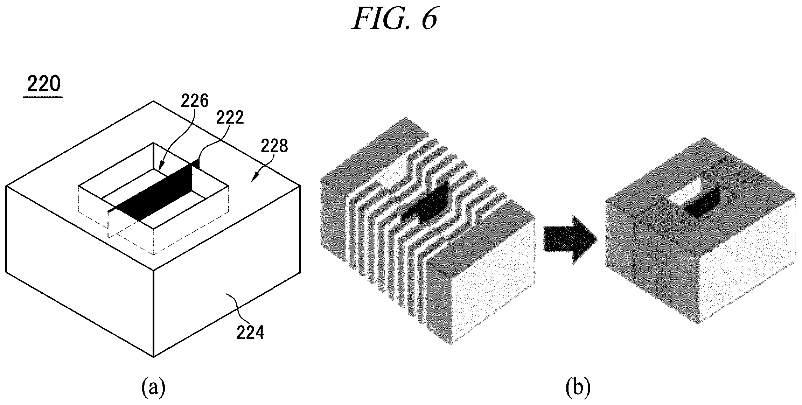

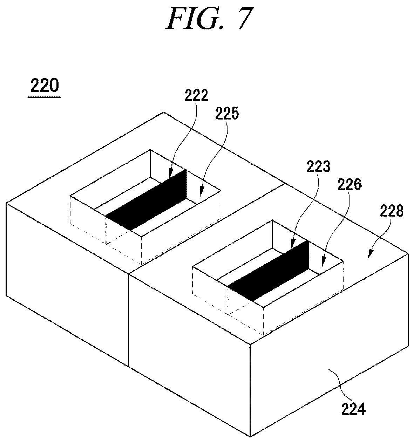

FIG. 5 is a cross-sectional view illustrating an X-ray tube using a carbon structure-based electron emission source according to an embodiment of the present invention, and FIGS. 6 and 7 are diagrams illustrating carbon structure-based electron emission sources according to an embodiment of the present invention.

Referring to FIG. 5, an X-ray tube (10) using a carbon structure-based electron emission source according to the present invention comprises a tube housing (100) having an internal space formed therein, a cathode (200) and an anode (300) disposed to face each other inside the tube housing (100), and a gate electrode (400) and a focusing lens (500) disposed between the cathode (200) and the anode (300).

The tube housing (100) serves as a vacuum container that maintains a vacuum inside and may have a tubular shape. The tube housing (100) may be made of a glass tube or a ceramic tube. The cathode (200) is disposed at one end of the tube housing (100) in a form accommodated within the tube housing (100), and the anode (300) is disposed at the other end of the tube housing (100) so as to face the cathode (200). In addition, a window (110) through which X-rays are emitted may be additionally formed on one side of the tube housing (100). The window (110) may be formed of a beryllium (Be) thin film, an aluminum (Al) thin film, or glass, but is not limited thereto. Furthermore, in order to maintain the vacuum state of the tube housing (100), a getter (120) may be disposed below, above, or at an intermediate position of the cathode (200).

The cathode (200) is disposed at one end of the tube housing (100) in a form accommodated therein. The cathode (200) is coupled with a carbon structure-based electron emission source (220) for electron emission. The cathode (200) comprises a substrate portion (210), and a carbon structure-based electron emission source (220) disposed on the substrate portion (210), wherein the carbon structure-based electron emission source (220) includes a carbon structure-based film linearly cut and attached thereto. As shown in FIG. 6, the carbon structure-based electron emission source (220) includes a densified carbon structure-based film (222) and conductive metal members (224) respectively disposed on both sides of the carbon structure-based film (222) to fix the film. The conductive metal member (224) includes a recess (226) formed to a predetermined depth from an upper surface (228). The carbon structure-based film (222) may be disposed across the center of the recess (226). The height of the carbon structure-based film (222) is formed to be equal to or slightly lower than the recessed depth of the recess (226). This configuration can further improve the electron emission characteristics of the carbon structure-based film (222). Meanwhile, as shown in FIG. 6(b), the conductive metal member (224) may have a structure in which a plurality of plate-shaped metal members are coupled side by side, and the carbon structure-based film (222) may be inserted between two metal members so as to be fixed therebetween.

In another embodiment, as shown in FIG. 7, it is also possible for a plurality of carbon structure-based films (222, 223) to be coupled to the electron emission source (220). In this case, the metal member (224) of the electron emission source (220) has a plurality of recesses (225, 226) in which the respective carbon structure-based films (222, 223) are coupled. The recessed depths of the recesses (225, 226) are formed to be equal to or slightly greater than the heights of the corresponding carbon structure-based films (222, 223).

The carbon structure-based electron emission source (220) in which a plurality of carbon structure-based films are arranged in an array form has the advantage that the output current increases in proportion to the number of carbon structure-based films relative to the applied voltage, compared with an embodiment including only a single carbon structure-based film.

Meanwhile, the conductive metal member (224) of the carbon structure-based electron emission source (220) may be grounded through the substrate portion (210). Additionally, for current measurement, a current meter or a current-voltage supply source may be additionally connected between the conductive metal member (224) and the ground.

Referring again to FIG. 5, the anode (300) is accommodated within the tube housing (100) and disposed at the other end of the tube housing (100) so as to face the cathode (200). A target surface, on which electrons emitted from the carbon structure-based electron emission source (210) collide, may be coupled to the surface of the anode (300) facing the inside of the tube. At this time, the end portion of the anode (300) is inclined at a predetermined angle so that the emission angle of X-rays can be adjusted. Electrons field-emitted from the carbon structure-based electron emission source (220) are accelerated toward the anode (300) by a potential difference between the cathode (200) and the anode (300), and then collide with the target surface of the anode (300), thereby emitting X-rays. For example, the target surface may be formed of tungsten (W) or a tungsten alloy tightly attached to the surface of a copper rod. In addition, a high voltage is applied to the anode (300) for electron emission. In some embodiments, the anode (300) may be formed as a rotating electrode. Specifically, the anode (300) may include a target provided on the rotating electrode, a rotor (not shown) supporting the target, and a rotation shaft (not shown). Accordingly, when X-rays are generated, the rotation of the target forms a circular track of the electron beam collision region, thereby enabling the generation of high-power X-rays.

The gate electrode (400) is located above the cathode electrode (200) and may include at least one opening (410) at a position corresponding to the carbon structure-based film (222). The opening (410) may be formed in the shape of a slit or a hole. When the carbon structure-based films (222) are coupled to the cathode electrode (200) in an array form, the gate electrode (400) may include a plurality of openings (410).

The focusing lens (500) is disposed between the gate electrode (400) and the anode (300) so that the electron beam is directed toward the target surface of the anode (300). Different driving voltages (Vg, Vfl) may be applied respectively to the gate electrode (400) and the focusing lens (500), or a common driving voltage may be applied thereto.

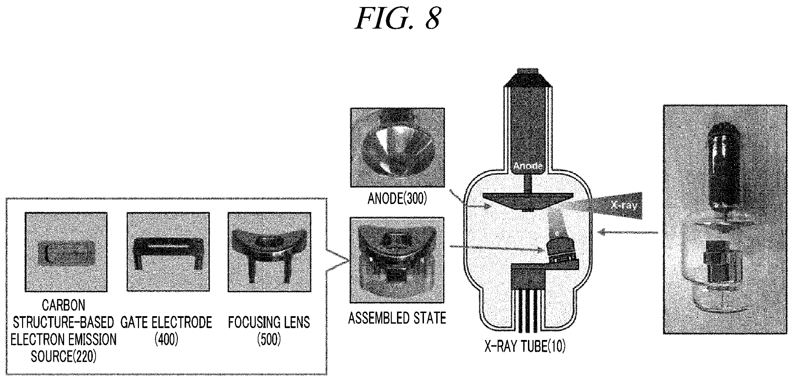

FIG. 8 is a photograph illustrating the fabricated X-ray tube according to one embodiment of the present invention.

As shown, the gate electrode (400) and the focusing lens (500) are fixed to the cathode (200) that includes the carbon structure-based electron emission source (220). It can be confirmed that a slit corresponding to the carbon structure-based film is formed in the gate electrode (400). It can also be confirmed that the anode (300) is implemented as a rotating electrode. Here, the anode (300) may be either a stationary electrode or a rotating electrode.

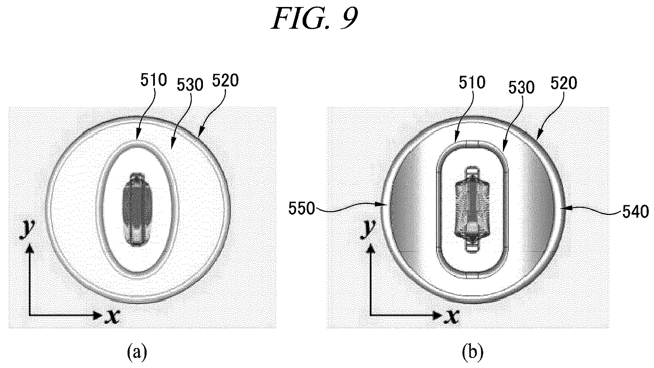

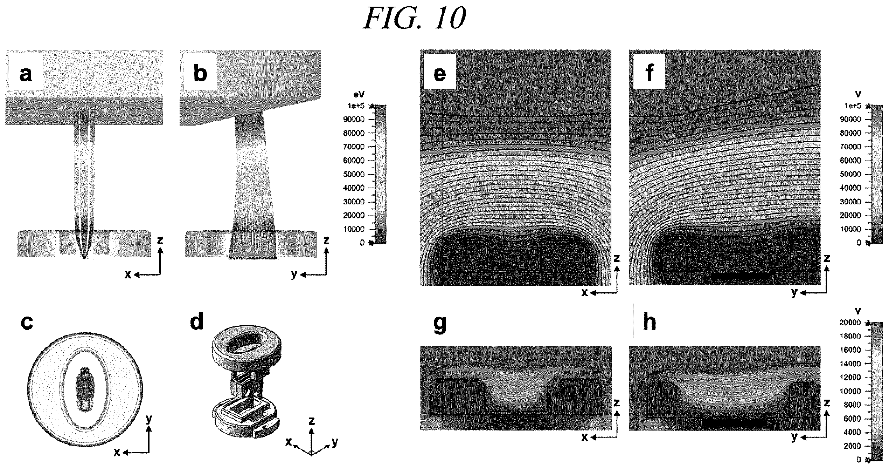

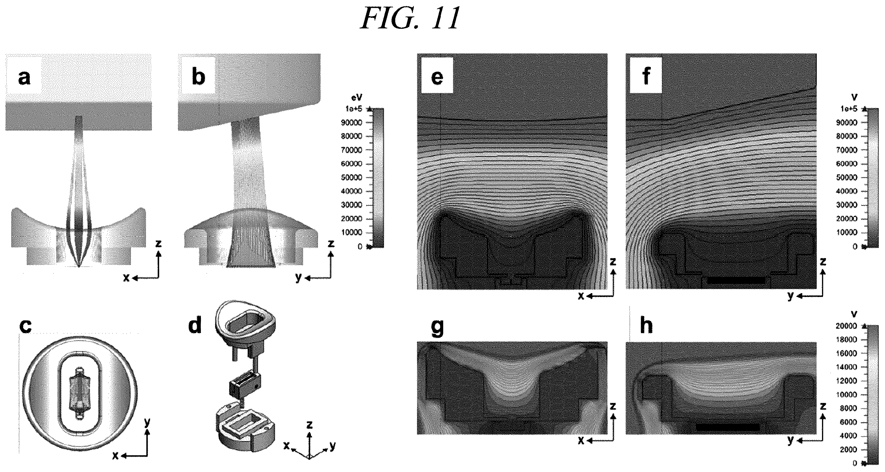

FIG. 9 is a diagram illustrating the electron beam focusing characteristics according to the shape of the focusing lens in one embodiment of the present invention, and FIGS. 10(a) to 10(h) and FIGS. 11(a) to 11(h) respectively illustrate the trajectories of the electron beam, focusing patterns, and potential distributions according to the shape of the focusing lens in embodiments of the present invention.

As shown in FIGS. 9(a) and 9(b), an outer circumferential surface (520) of the focusing lens may be formed in an elliptical or circular shape. In addition, an opening (510) of the focusing lens may be curved and generally formed in an elliptical shape.

In the embodiment shown in FIG. 9(a), an upper surface (530) of the focusing lens may be formed as a planar surface, whereas, as shown in FIG. 9(b), it may be formed as a curved surface.

First, referring to the embodiment of FIG. 9(a), the outer circumferential surface (520) of the focusing lens is formed in an elliptical or circular shape, the opening (510) is curved and generally formed in an elliptical shape, and the upper surface (530) is formed as a planar surface.

FIGS. 10(a) to 10(h) illustrate the simulation results of the electron beam trajectories and potential distributions in the embodiment of FIG. 9(a) when the focusing lens shape of that embodiment is applied. FIGS. 10(a) and 10(b) are side sectional views illustrating the trajectories of electron beams from the carbon structure-based film (222) to the anode (300). Specifically, FIG. 10(a) shows a sectional view cut in a direction (x) perpendicular to the longitudinal direction of the opening (510) of the focusing lens, and FIG. 10(b) shows a sectional view cut along the longitudinal direction (y) of the opening (510). As shown in FIGS. 10(a) and 10(b), the height (z) of the focusing lens is confirmed to be identical in both directions.

FIG. 10(c) illustrates a plan view of the focusing lens and the focusing of electron beams, and FIG. 10(d) shows the component structure and assembly method of the substrate portion, carbon structure-based electron emission source, gate electrode, and focusing lens.

FIG. 10(e) illustrates a side sectional view of the potential distribution between the focusing lens (500) and the anode (300), taken along a direction (x) perpendicular to the longitudinal direction of the opening (510) of the focusing lens (500), and FIG. 10(f) illustrates a side sectional view of the potential distribution between the focusing lens (500) and the anode (300), taken along the longitudinal direction (y) of the opening (510) of the focusing lens (500).

FIG. 10(g) illustrates a side sectional view of the potential distribution between the carbon structure-based electron emission source (220) and the focusing lens (500), taken along a direction (x) perpendicular to the longitudinal direction of the opening (510) of the focusing lens (500), and FIG. 10(h) illustrates a side sectional view of the potential distribution between the carbon structure-based electron emission source (220) and the focusing lens (500), taken along the longitudinal direction (y) of the opening (510) of the focusing lens (500).

Next, referring to the embodiment shown in FIG. 9(b), the outer circumferential surface (520) of the focusing lens is formed in an elliptical or circular shape, the opening (510) is curved and generally formed in an elliptical shape, and the upper surface (530) is formed as a curved surface.

FIGS. 11(a) to 11(h) illustrate simulation results of the electron beam trajectories and potential distributions in the embodiment of FIG. 9(b) when the focusing lens shape of that embodiment is applied. FIGS. 11(a) and 11(b) are side sectional views showing the trajectories of electron beams from the carbon structure-based electron emission source (220) to the anode (300). Specifically, FIG. 11(a) shows a sectional view taken along a direction (x) perpendicular to the longitudinal direction of the opening (510) of the focusing lens, and FIG. 11(b) shows a sectional view taken along the longitudinal direction (y) of the opening (510). As shown in FIGS. 11(a) and 11(b), the height (z) of the focusing lens gradually increases toward the ends of the x-axis. That is, along a direction perpendicular to the longitudinal direction of the opening (510) or the extending direction of the carbon structure-based film, the height of the upper surface of the focusing lens gradually increases so that the heights at both end portions (540, 550) of the upper surface are formed to be the maximum.

FIG. 11(c) illustrates a plan view of the focusing lens and electron beam focusing, and FIG. 11(d) illustrates the component configuration and assembly method of the substrate portion, the carbon structure-based electron emission source, the gate electrode, and the focusing lens.

FIG. 11(e) illustrates a side sectional view of the potential distribution between the focusing lens (500) and the anode (300), taken along a direction (x) perpendicular to the longitudinal direction of the opening (510) of the focusing lens (500), and FIG. 11(f) illustrates a side sectional view of the potential distribution between the focusing lens (500) and the anode (300), taken along the longitudinal direction (y) of the opening (510) of the focusing lens (500).

FIG. 11(g) illustrates a side sectional view of the potential distribution between the carbon structure-based electron emission source (220) and the focusing lens (500), taken along a direction (x) perpendicular to the longitudinal direction of the opening (510) of the focusing lens (500), and FIG. 11(h) illustrates a side sectional view of the potential distribution between the carbon structure-based electron emission source (220) and the focusing lens (500), taken along the longitudinal direction (y) of the opening (510) of the focusing lens (500).

When comparing the embodiments shown in FIGS. 10(a) to 10(h)) and FIGS. 11(a) to 11(h), it can be seen that, when the upper surface of the focusing lens is formed as a curved surface, as in FIG. 11(a), the focal point of the electron beam is formed relatively smaller. In addition, when comparing FIGS. 10(a) and 11(a), as well as FIGS. 10(b) and 11(b), it can be confirmed that the electron beam is more concentrated in the direction (x) crossing the length direction (y) of the opening, than along the longitudinal direction (y) itself.

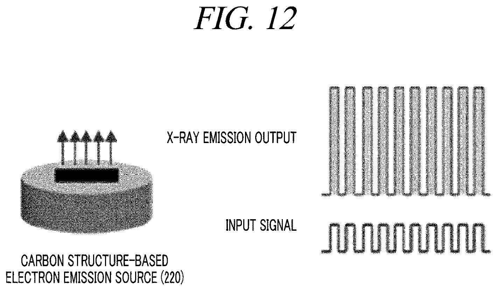

FIG. 12 is a diagram illustrating the operating characteristics of the X-ray tube according to one embodiment of the present invention.

As shown in FIG. 12, when the voltage applied to the gate electrode (400) is input in the form of a voltage pulse, X-rays are output in the form of digital pulses accordingly. In particular, when a uniform pulse voltage of an appropriate level is applied to the gate electrode (400), X-rays of a constant dose can be immediately and rapidly emitted, and when the voltage application is stopped, the generation of X-rays can be immediately interrupted. Accordingly, the X-ray emission time and the radiation dose can be easily and accurately controlled.

As such, according to the cold cathode X-ray tube of the present invention, digital-type X-ray tube driving is enabled, unlike conventional analog-type X-ray tubes.

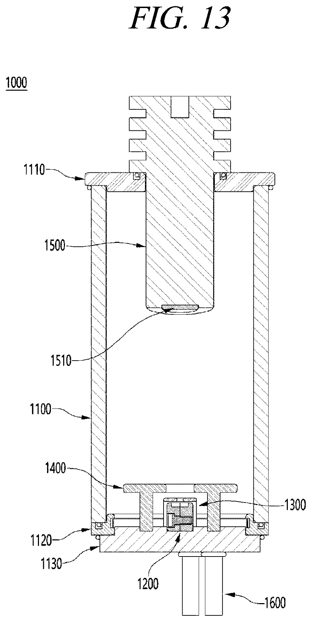

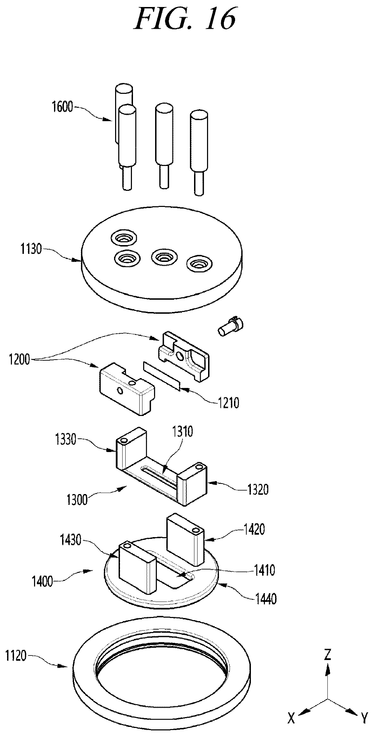

FIGS. 13 to 15 are diagrams illustrating an X-ray tube using a carbon structure-based film according to another embodiment of the present invention, and FIGS. 16 to 22 are diagrams illustrating detailed configurations of an X-ray tube including a cathode, an electron emission source, a gate electrode, and a focusing lens according to one embodiment of the present invention.

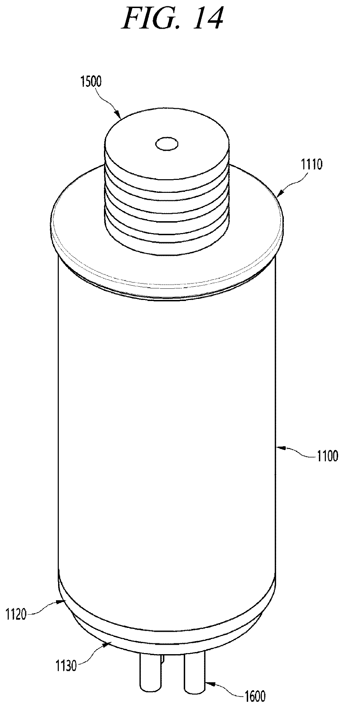

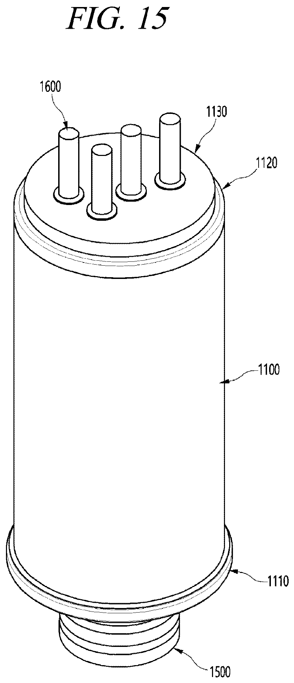

FIG. 13 is a cross-sectional view of an X-ray tube (1000), FIG. 14 is a perspective view of the X-ray tube (1000) viewed from the upper side, and FIG. 15 is a perspective view of the X-ray tube (1000) viewed from the lower side.

Referring to FIG. 13, the X-ray tube (1000) using a carbon structure-based film according to the present invention comprises a tube housing (1100) having an internal space formed therein, a cathode (1200) and an anode (1500) disposed to face each other inside the tube housing (1100), and a gate electrode (1300) and a focusing lens (1400) disposed between the cathode (1200) and the anode (1500).

The tube housing (1100) serves as a vacuum container that maintains an internal vacuum and may have a tubular shape. The tube housing (1100) may be formed of a glass tube or a ceramic tube. Within the tube housing (1100), a cathode (1200) is disposed at one end, and an anode (1500) is disposed at the other end so as to face the cathode (1200). Additionally, an X-ray emission window (not shown) may be formed at one side of the tube housing (1100). To maintain the vacuum state of the tube housing (1100), a getter (1140) may be disposed along the inner circumference beneath the cathode (1200).

The upper portion of the tube housing (1100) is coupled to the anode (1500). The anode (1500) may be formed such that its diameter is adjusted to partially cover or entirely cover the upper opening of the tube housing (1100). A first adapter ring (1110) is coupled between the anode (1500) and the tube housing (1100). The first adapter ring (1110) compensates for the difference in thermal expansion coefficients between the anode (1500) and the tube housing (1100), thereby preventing damage to the tube housing (1100). The tube housing (1100) may generally be made of ceramic (for example, Al₂ O₃ ), and the first adapter ring (1110) may be made of Kovar material, which has a thermal expansion coefficient similar to that of the ceramic. **In** the present invention, copper may be used as the material of the anode (1500) to improve electrical and thermal conductivity. However, when copper and ceramic are brazed together at high temperature and then cooled, the difference in thermal expansion coefficients between copper and ceramic may cause the ceramic to crack. To solve this problem, the first adapter ring (1110) is disposed between the anode (1500) and the tube housing (1100), such that the anode (1500) and the first adapter ring (1110) are brazed together, and the first adapter ring (1110) and the tube housing (1100) are also brazed together.

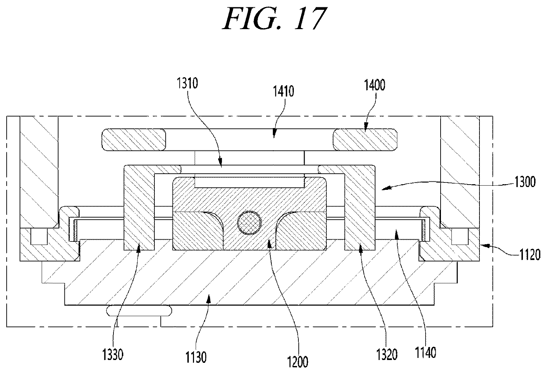

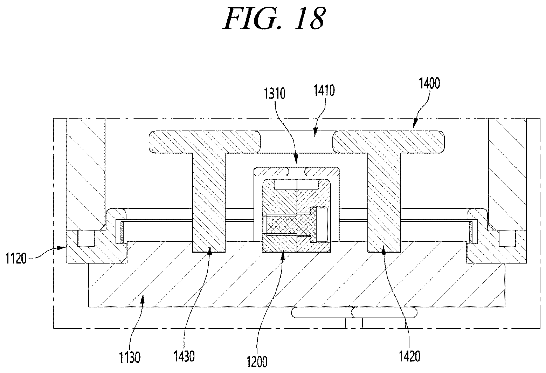

FIG. 16 illustrates the detailed configuration of an X-ray source including a cathode, an electron emission source, a gate electrode, and a focusing lens according to one embodiment of the present invention. FIG. 17 illustrates a cross-sectional view of the X-ray source taken along the y-axis direction according to one embodiment of the present invention, and FIG. 18 illustrates a cross-sectional view of the X-ray source taken along the x-axis direction according to one embodiment of the present invention.

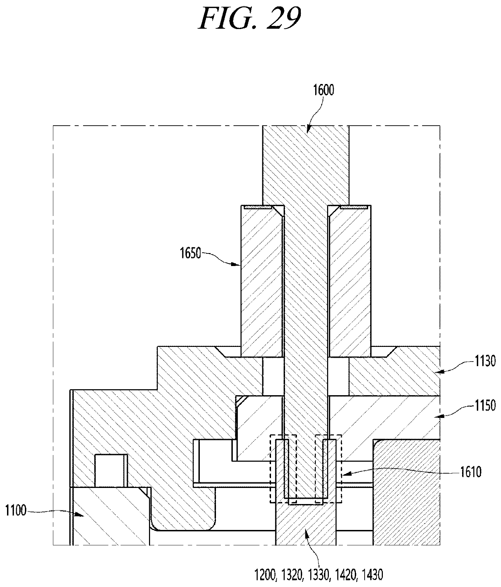

The cathode (1200) is accommodated within the tube housing (1100) and may be disposed at one end of the tube housing (1100), more specifically in a recess located on the upper side of the bottom surface (1130). A carbon structure-based film (1210) for electron emission is coupled to the cathode (1200). In the embodiment explained later with reference to FIG. 29, the bottom surface (1130) is made of Kovar metal, and a ceramic substrate (1150) is separately provided to electrically insulate the bottom surface (1130) from the cathode (1200), the gate electrode (1300), and the focusing lens (1400). However, as shown in FIG. 16, when the bottom surface (1130) is made of a ceramic material, the cathode (1200), the gate electrode (1300), and the focusing lens (1400) may be directly coupled to the upper side of the bottom surface (1130).

In addition, a gate electrode (1300) having a slit (1310) that exposes the carbon structure-based film (1210) is disposed above the cathode (1200). As also shown in FIG. 8, the gate electrode (1300) may be formed in a bridge shape in which its main body is supported by support portions (1320, 1330) at both ends.

The cathode (1200) may be positioned in the space defined between the support portions (1320, 1330) of the gate electrode (1300). Furthermore, a focusing lens (1400) is disposed above the gate electrode (1300). As shown in FIGS. 8 and 9, the focusing lens (1400) includes an upper surface (1440) supported by support portions (1420, 1430) at both ends, and an opening (1410) is formed at the central portion of the upper surface (1440). The outer circumferential surface of the upper surface (1440) may be formed in an elliptical, circular, or rounded rectangular shape. The cathode (1200), the gate electrode (1300), and the focusing lens (1400) are respectively mounted within the recess formed on the upper side of the bottom surface (1130), and electrode pins (1600) may penetrate the bottom surface (1130) to apply voltages respectively to the cathode (1200), the gate electrode (1300), and the focusing lens (1400).

Meanwhile, the support portions (1320, 1330) of the gate electrode (1300) and the support portions (1420, 1430) of the focusing lens (1400) are arranged so as not to interfere with each other. For example, the imaginary line connecting the support portions (1320, 1330) of the gate electrode (1300) may be arranged to intersect with the imaginary line connecting the support portions (1420, 1430) of the focusing lens (1400). Through such a configuration, independent voltages can be applied to the support portions (1320, 1330) of the gate electrode (1300) and the support portions (1420, 1430) of the focusing lens (1400) via the electrode pins (1600).

In addition, the electrode pins (1600) may penetrate the bottom surface (1130) and be coupled to the lower sides of the support portions (1320, 1330), the support portions (1420, 1430), or the cathode (1200). The coupling structure of the electrode pins (1600) will be described in detail later.

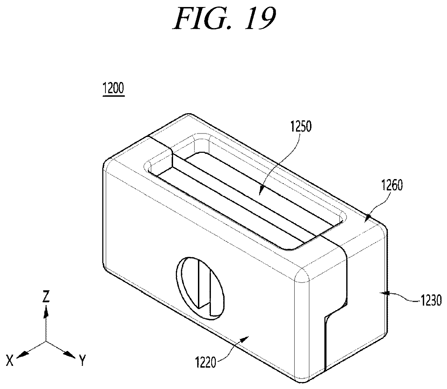

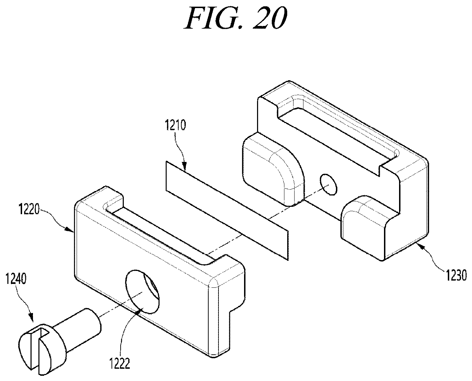

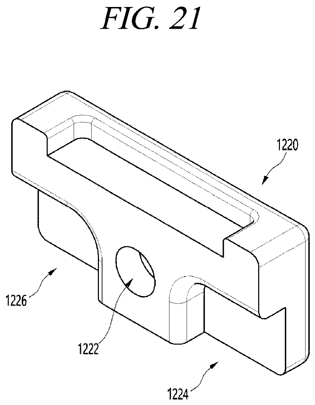

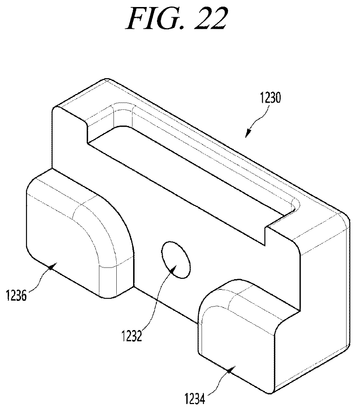

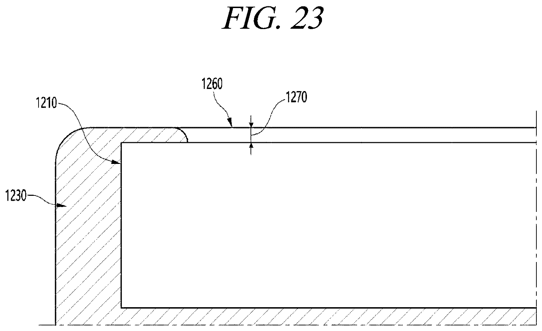

FIG. 19 is a perspective view illustrating the detailed structure of a cathode according to one embodiment of the present invention, FIG. 20 is an exploded perspective view illustrating the assembly structure of the cathode according to one embodiment of the present invention, FIGS. 21 and 22 illustrate the configurations of each clamp of the cathode according to one embodiment of the present invention, and FIG. 23 exemplarily illustrates the configuration of a recess according to one embodiment of the present invention.

The cathode (1200) extends along the longitudinal direction of the carbon structure-based film (1210) and includes a first clamp (1220) and a second clamp (1230) that are respectively in close contact with the side surfaces thereof to fix the carbon structure-based film (1210), and a fastening member (1240) that couples the first clamp (1220) and the second clamp (1230).

In the state where the first clamp (1220) and the second clamp (1230) are coupled to each other, the cathode (1200) has an overall shape similar to a rectangular parallelepiped and includes a recess (1250) formed to a predetermined depth on its flat upper surface. In addition, in the coupled state of the first clamp (1220) and the second clamp (1230), the height of the edges (1260) of the respective clamps (1220, 1230) is set to be the same so that the recess (1250) is formed. The recess (1250) is formed on the upper surface of the cathode (1200) with a clearance corresponding to the edge (1260) of the upper surface of the cathode (1200). The carbon structure-based film (1210) is exposed to the outside at a height equal to or slightly lower than the depth of the recess (1250). That is, the length of the carbon structure-based film (1210) exposed in the z-axis direction may be set to be equal to or slightly smaller than the distance between the upper surface of the cathode (1200) and the upper surface of the recess (1250). As shown in FIG. 23, the height of the uppermost surface of the carbon structure-based film (1210) may be set to be lower than the edge (1260) of the upper surface of the cathode (1200) by a predetermined length (1270). For example, the predetermined length (1270) may be between 0.1 mm and 1 mm, preferably about 0.2 mm, although this is merely an example and may be varied. When a voltage is applied between the cathode (1200) and the gate electrode (1300), the electric field applied to the upper end of the carbon structure-based film (1210) is affected by the depth of the recess (1250). In practice, electrons are emitted through the upper end surface of the exposed region of the carbon structure-based film (1210) when a voltage is applied between the cathode (1200) and the gate electrode (1300). Accordingly, in order to maintain the optimal magnitude of the electric field, the recess (1250) is recessed to an appropriate depth.

The carbon structure-based film (1210) is interposed between the facing surfaces of the first clamp (1220) and the second clamp (1230). On the inner surface of the second clamp (1230), at least one or more protrusions (1234, 1236) may be formed to protrude. For example, a first protrusion (1234) may be formed at one corner on the inner surface of the second clamp (1230), and a second protrusion (1236) may be formed at the opposite corner on the inner surface of the second clamp (1230).

In order to accommodate the protrusions (1234, 1236) of the second clamp (1230), a first receiving portion (1224) and a second receiving portion (1226) may be formed on the inner surface of the first clamp (1220). A space corresponding to the length of the protrusions (1234, 1236) extending in the x-axis direction and the length thereof extending in the z-axis direction is secured so that each protrusion (1234, 1236) is sufficiently received. Through this configuration, the first clamp (1220) and the second clamp (1230) can be tightly engaged to achieve a firm coupling state. In addition, the contact surfaces between each protrusion (1234, 1236) and each receiving portion (1224, 1226) are formed as curved surfaces so that the first clamp (1220) and the second clamp (1230) can be smoothly fastened together. Further, fastening grooves (1222, 1232) that penetrate the bodies of the first clamp (1220) and the second clamp (1230), respectively, are formed at the central portions thereof, and the fastening member (1240) is coupled through the fastening grooves (1222, 1232) so that the first clamp (1220) and the second clamp (1230) are joined together. The fastening grooves (1222, 1232) are formed below the region where the carbon structure-based film (1210) is in close contact.

The protrusions (1234, 1236) and their receiving portions (1224, 1226) may not only serve to support the carbon structure-based film (1210) but also serve to maintain the coupled state between the first clamp (1220) and the second clamp (1230) in a stable manner.

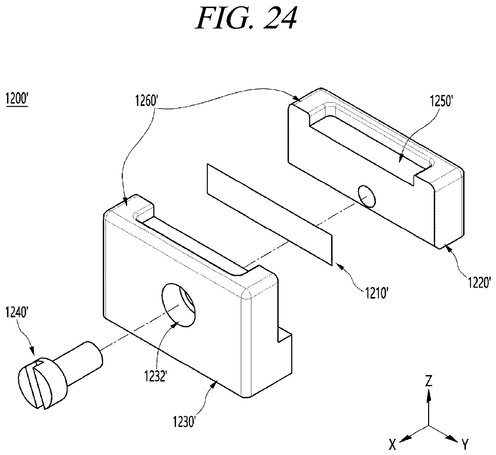

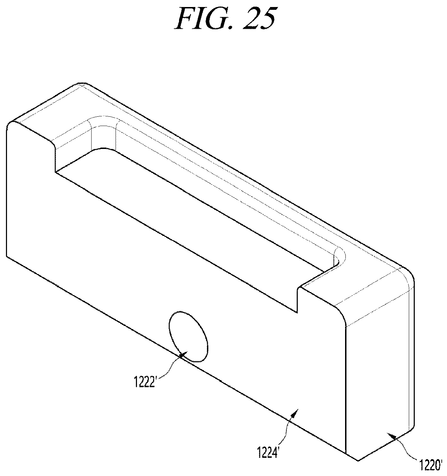

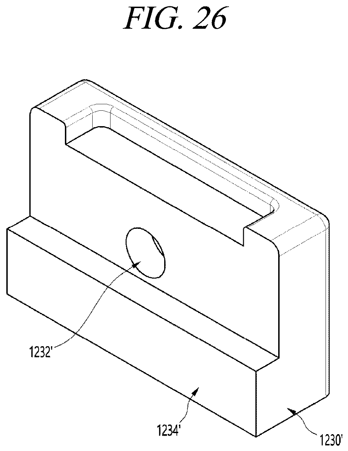

FIG. 24 is an exploded perspective view illustrating a cathode according to another embodiment of the present invention, and FIGS. 25 and 26 illustrate the configurations of each clamp of the cathode according to another embodiment of the present invention.

The cathode (1200') extends along the longitudinal direction of the carbon structure-based film (1210') and includes a first clamp (1220') and a second clamp (1230') that are respectively in close contact with both side surfaces thereof to fix the carbon structure-based film (1210'), and further includes a fastening member (1240') that couples the first clamp (1220') and the second clamp (1230').

In the state where the first clamp (1220') and the second clamp (1230') are coupled together, the cathode (1200') has an overall shape similar to a rectangular parallelepiped and includes a recess (1250') formed to a predetermined depth on its upper surface. Since the configuration of the recess (1250') is the same as that of the previously described embodiment, a detailed description thereof will be omitted.

The carbon structure-based film (1210') is interposed between the facing surfaces of the first clamp (1220') and the second clamp (1230'). On the inner surface of the second clamp (1230'), a protrusion (1234') may be formed to protrude. The protrusion (1234') may be formed to have a predetermined height in the z-axis direction from the lower end portion of the inner surface of the second clamp (1230'). Through such a configuration, the first clamp (1220') and the second clamp (1230') can be tightly engaged to maintain a firm coupling state. The protrusion (1234') may be linearly formed along the length direction (y-axis direction) of the second clamp (1230') with a predetermined length. For example, the protrusion (1234') may be formed to have the same length as the y-axis length, although depending on the embodiment, it may be formed longer or shorter than that.

In addition, the first clamp (1220') is coupled to the space above the upper end of the protrusion (1234') of the second clamp (1230'). The thickness of the first clamp (1220') in the x-axis direction may generally correspond to the length by which the protrusion (1234') extends in the x-axis direction; however, the thickness of the first clamp (1220') in the x-axis direction may be designed to be greater than the length by which the protrusion (1234') extends in the x-axis direction. Preferably, the shortest distance between the upper edge (1260') of the first clamp (1220') and the carbon structure-based film (1210') is designed to be equal to the shortest distance between the upper edge (1260') of the second clamp (1230') and the carbon structure-based film (1210').

Furthermore, fastening grooves (1222', 1232') penetrating through the bodies of the first clamp (1220') and the second clamp (1230'), respectively, are formed at the central portions thereof. A fastening member (1240') is coupled through the fastening grooves (1222', 1232') so that the first clamp (1220') and the second clamp (1230') are joined together. The fastening grooves (1222', 1232') are formed below the region where the carbon structure-based film (1210') is in close contact.

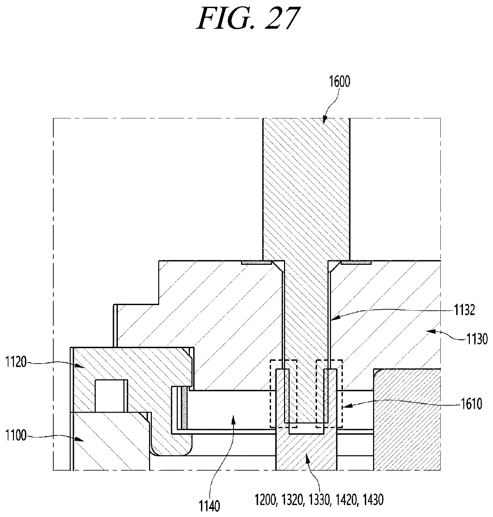

FIG. 27 is a diagram illustrating the coupling structure of electrode pins according to one embodiment of the present invention.

As shown, at least one or more electrode pins (1600) may be individually coupled to the cathode (1200), the support portions (1320, 1330) of the gate electrode (1300), and the support portions (1420, 1430) of the focusing lens (1400). At this time, it may also be implemented such that each electrode pin (1600) is coupled to any one of the two support portions (1320, 1330) of the gate electrode (1300) or any one of the two support portions (1420, 1430) of the focusing lens (1400).

A plurality of feedthroughs (1132) through which the plurality of electrode pins (1600) can penetrate may be pre-formed in the bottom surface (1130). The end of each electrode pin (1600) may be formed in a threaded shape (1610), and grooves into which the threads can be engaged are formed in the cathode (1200), the support portions (1320, 1330) of the gate electrode (1300), or the support portions (1420, 1430) of the focusing lens (1400) that are coupled to the ends of the electrode pins (1600), respectively. Accordingly, each electrode pin (1600) can be easily coupled by a screw engagement. Through this configuration, after each electrode pin (1600) passes through the feedthroughs (1132) of the bottom surface (1130), it can be easily screwed into the cathode (1200), the support portions (1320, 1330) of the gate electrode (1300), or the support portions (1420, 1430) of the focusing lens (1400), thereby eliminating the need for a separate alignment process for positioning each component.

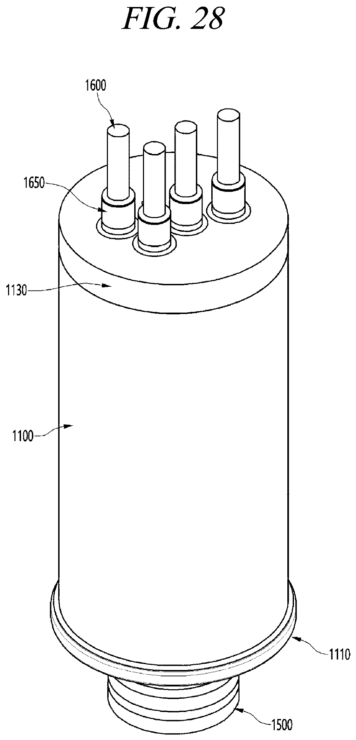

FIG. 28 is a diagram illustrating an X-ray tube employing a carbon structure-based electron emitter according to another embodiment of the present invention.

Unlike the embodiment of FIG. 13, the bottom surface (1130) is made of a metallic material such as Kovar. Accordingly, in the present embodiment, as shown in FIG. 29, the configuration of the second adapter ring (1120) is omitted, and an insulating substrate (1150) made of an insulating material such as ceramic is provided so as to insulate the cathode (1200), the gate electrode (1300), and the focusing lens (1400) from the conductive bottom surface (1130).

FIG. 29 is a diagram illustrating the coupling structure of electrode pins in the X-ray tube according to one embodiment of the present invention.

As shown, in order to insulate between the plurality of electrode pins (1600), a feedthrough (1650) made of an insulating material such as ceramic may be coupled to each electrode pin (1600) in a penetrating manner. Each electrode pin (1600) may penetrate the bottom surface (1130) and the substrate (1150) and may be screwed to each of the cathode (1200), the support portions (1320, 1330) of the gate electrode (1300), or the support portions (1420, 1430) of the focusing lens (1400). For this purpose, the end of each electrode pin (1600) is formed in a threaded shape (1620), and grooves into which the threads can be engaged are respectively formed in the cathode (1200), the support portions (1320, 1330) of the gate electrode (1300), or the support portions (1420, 1430) of the focusing lens (1400), which is the same configuration as previously described.

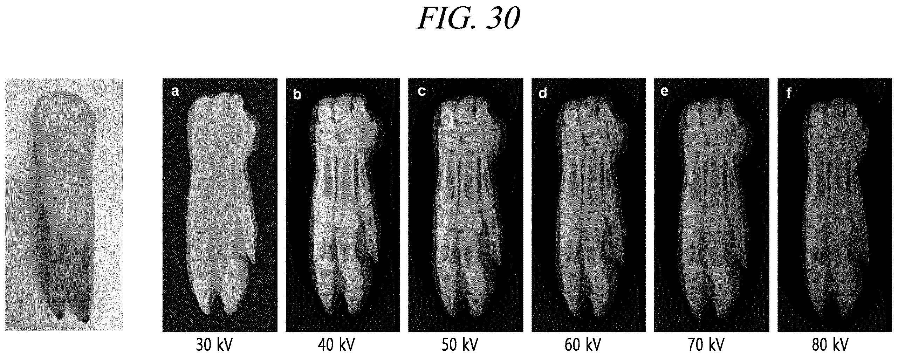

FIG. 30 is a diagram illustrating the test results of X-ray imaging obtained from the X-ray tube according to one embodiment of the present invention.

It was confirmed that the cold cathode X-ray tube according to the present invention is capable of outputting excellent high-resolution X-ray images even at relatively low X-ray doses and low tube voltages.

In addition, it was confirmed that the cold cathode X-ray tube of the present invention can have a higher tube current (approximately 100 mA or more) and a smaller electron beam focal spot size (0.5 mm) compared to conventional cold cathode X-ray tubes.

Accordingly, it can be applied to various medical diagnostic X-ray apparatuses. Furthermore, in addition to medical X-ray devices, it can be widely utilized in various industrial applications, such as inspection equipment and security screening devices employing X-rays.

Hereinafter, the present disclosure will be described in more detail using examples; however, the following examples are merely provided for facilitating the understanding of the present disclosure, and the scope of the present invention is not limited thereto.

*110

### [Embodiments]

### 1. Manufacturing and Densification Process of Carbon Nanotube Film

### 1-1. Manufacturing Process of Carbon Nanotube Film

In this example, 200 mg of multi-walled carbon nanotubes synthesized by a catalytic chemical vapor deposition (CCVD) method and 200 mg of a dispersant, sodium dodecyl sulfate (SDS), were added to 200 mL of distilled water (DI water). The dispersion process was performed using a tip sonication device, which disperses materials ultrasonically, at 150 W for 55 minutes. Through the above process, the aggregated carbon nanotubes were uniformly dispersed, and the length of the carbon nanotubes was uniformly shortened to a level suitable for field electron emission. Subsequently, the dispersed carbon nanotube solution was transferred into a plastic container, and a centrifugation process was carried out under conditions of 10,000 g to 20,000 g for 40 minutes. During this process, uniformly dispersed carbon nanotubes were separated from the insufficiently dispersed aggregated carbon nanotubes. After centrifugation, the uniformly dispersed carbon nanotube solution located at the upper portion of the plastic container was collected using a pipette. Then, by passing the uniformly dispersed carbon nanotube solution through an anodized aluminum oxide (AAO) membrane having a pore size of 100 nm or less (for example, 20 to 60 nm) using a vacuum filtration device, the carbon nanotubes were deposited on the membrane to form a carbon nanotube film, and the remaining solution was removed through the pores. Thereafter, to remove the organic substance SDS, acetone, isopropyl alcohol (IPA), and distilled water, which effectively dissolve polar materials, were sequentially poured onto the carbon nanotube film to remove SDS. Next, in order to separate the carbon nanotube film from the AAO membrane, the carbon nanotube film/AAO membrane was immersed in a NaOH aqueous solution having a concentration of 1 M to 3 M (for example, 1 M) for 1 hour. After the AAO membrane was completely dissolved in the NaOH aqueous solution, the carbon nanotube film was immersed in distilled water for 30 minutes to remove residual NaOH solution and then immersed in acetone - a solvent effective for removing SDS - for 6 to 24 hours (for example, 12 hours).

### 1-2. Densification Process of Carbon Nanotube Film

The carbon nanotube film prepared through the process of section 1-1 was cut into a rectangular shape, and a densification process was performed. First, the carbon nanotube film was immersed in a polar solvent having appropriate polarity (for example, ethylene carbonate), and an electric voltage of 1 V to 20 V (for example, 5 to 10 V) was applied to the polar solvent to align the polar molecules in a certain direction, thereby densifying the carbon nanotube film. After applying the voltage for 10 to 60 minutes, the carbon nanotube film was removed from the polar solvent and sequentially washed with distilled water and acetone to perform the first densification process. Subsequently, a second densification process using an acid was carried out. In the second densification process, without applying voltage, the carbon nanotube film was immersed in a 5 M acetic acid aqueous solution for 10 to 60 minutes to densify the carbon nanotube film. Afterward, the carbon nanotube film was removed from the acetic acid solution and sequentially washed with acetone and distilled water. Finally, to remove residual polar solvent, acidic aqueous solution, or foreign substances possibly remaining in the washed carbon nanotube film, a heat treatment was carried out in an argon (Ar) atmosphere at 100°C to 350°C for 30 minutes to 2 hours, thereby removing residual acid and solvent.

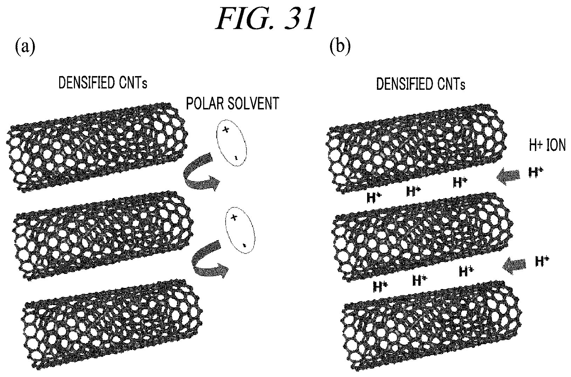

Referring to FIG. 31, the principle of the two-step densification process will now be described. When the surface tension value of the polar solvent is high, the polar solvent cannot effectively penetrate into the interior of the carbon nanotube film, resulting in a reduced densification effect. Additionally, as densification proceeds under the influence of the surface tension of the polar solvent, the densification efficiency tends to decrease. In contrast, in the case of hydrogen ions, which exist as ions in an aqueous solution regardless of surface tension, such a decrease in effect does not occur as densification proceeds. Therefore, in the first densification step, a polar solvent having a high dipole moment value is used to densify the carbon nanotube film. After completely removing the polar solvent, a second densification step is performed using an acidic aqueous solution capable of effectively penetrating into the densified carbon nanotube film. The acidic aqueous solution may be selected from strong acid or weak acid aqueous solutions (such as aliphatic or aromatic carboxylic acids), depending on the intended purpose.

### 2. Thickness of Carbon Nanotube Film According to the Densification Process

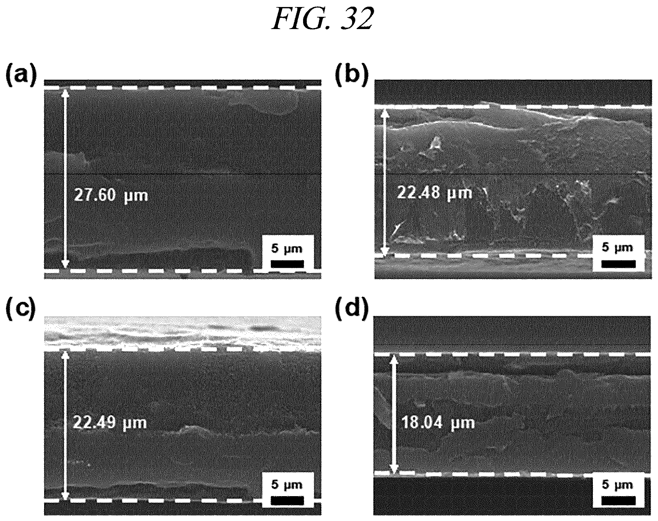

FIGS. 32(a) to 32(d) are scanning electron microscope (SEM) images sequentially showing the cross-sectional thicknesses of: a carbon nanotube film without undergoing any densification process, a carbon nanotube film densified with ethylene carbonate, a carbon nanotube film densified with an acetic acid aqueous solution, and a carbon nanotube film densified through a two-step process using ethylene carbonate (first step) and 5 M acetic acid (second step). Before the densification process, the thickness of the carbon nanotube film was approximately 27.60 µm, whereas the thicknesses of the films densified in a single step using ethylene carbonate or an acetic acid aqueous solution were 22.48 µm and 22.49 µm, respectively - reduced by about 5 µm. This confirms that both acidic aqueous solutions and polar solvents can effectively densify carbon nanotube films. Meanwhile, the carbon nanotube film subjected to the two-step densification process exhibited a thickness reduction of approximately 9.5 µm, resulting in a final thickness of about 18 µm, which is approximately 4.5 µm thinner than that obtained from the single-step densification process. These results demonstrate that performing a first densification process using a polar solvent followed by a second densification process using an acidic aqueous solution enables more effective densification of the carbon nanotube film.

### 3. Variation in Field Electron Emission Characteristics of Carbon Nanotube Film According to the Densification Process

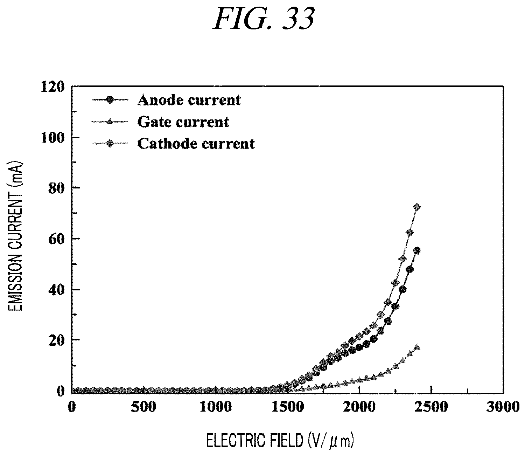

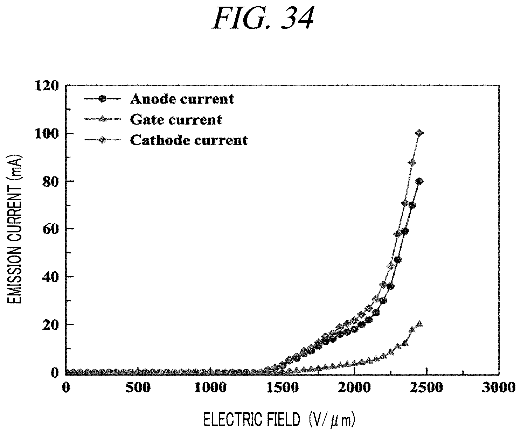

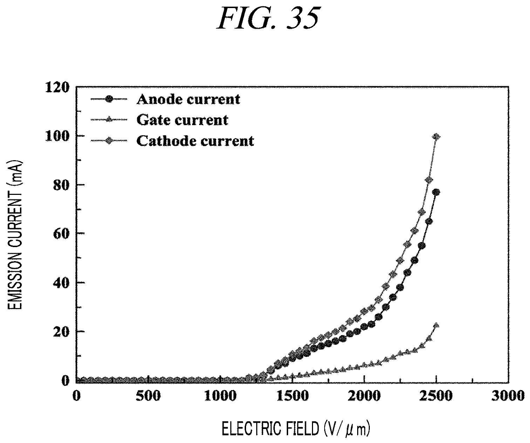

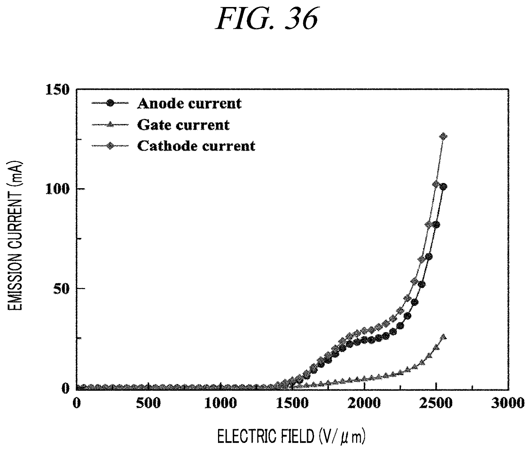

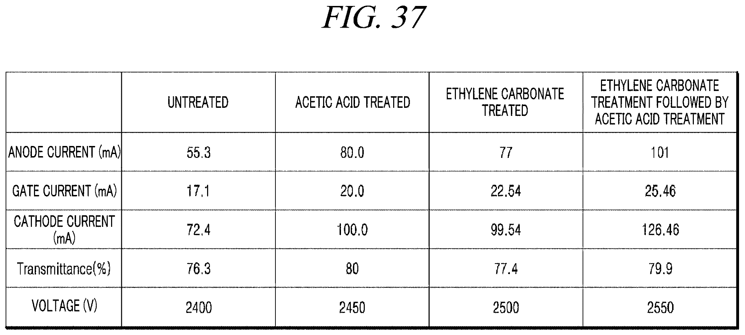

When fabricating a cold cathode X-ray tube using a carbon nanotube thin-film emitter, the intensity of the generated X-rays is proportional to the anode current of the carbon nanotube film emitter, while the energy of the X-rays is proportional to the magnitude of the applied anode voltage. At this time, the generated anode current is hardly affected by the anode voltage. Accordingly, during the measurement of the field electron emission characteristics of the carbon nanotube film emitter, the anode voltage was set to 15 kV or less to enable stable measurement. As shown in FIGS. 33 to 36, and 37, the results of evaluating the field emission characteristics revealed that the maximum anode currents of the carbon nanotube films were 55.3 mA, 80 mA, 77 mA, and 101 mA for the untreated film (no treatment), the film densified with a polar solvent (ethylene carbonate), the film densified with an acidic aqueous solution (acetic acid), and the film densified sequentially with a polar solvent (ethylene carbonate) and an acidic aqueous solution (acetic acid), respectively. Meanwhile, the transmittance showed no significant difference among these cases.

Therefore, it was confirmed that the field electron emission characteristics of the carbon nanotube thin-film emitter are greatly influenced by the degree of densification of the carbon nanotube film. The degradation in the field emission performance of the carbon nanotube thin-film emitter can be affected mainly by two factors. The first factor is related to the applied electric field. Since the carbon nanotube film is bonded by van der Waals forces, during field emission, portions of the carbon nanotubes may detach from the film or the film itself may tear under the influence of the electric field. In such cases, the emitter performance significantly deteriorates, or electrical arcing may occur. The second factor is related to Joule heating, which is generated by the flow of electrons during field emission. For field emission to occur, electrons must travel from the substrate (SUS304) through the carbon nanotube film to the tips of the nanotubes located on the surface. During this movement, Joule heat is generated due to the contact resistance between the substrate and the carbon nanotube film, the bulk resistance resulting from the inter-tube contact properties within the carbon nanotube film, and the intrinsic resistance of the individual carbon nanotubes. Accordingly, to enhance the field electron emission characteristics of the carbon nanotube thin-film emitter, it is necessary to minimize nanotube detachment or film damage caused by the electric field and, at the same time, to reduce the contact resistance and improve the electrical conductivity of the carbon nanotube film.

Improving the electrical conductivity of the carbon nanotube film means increasing the number of nanotubes contributing to electron emission within the film. When the carbon nanotube film is densified, the distance between individual nanotubes decreases, thereby increasing the van der Waals forces acting between them. As a result, the contact area between nanotubes increases, leading to improved electrical conductivity of the film. Therefore, as the carbon nanotube film becomes more densely packed, the van der Waals forces between nanotubes strengthen, reducing nanotube detachment or film damage under an electric field. In addition, the increased electrical conductivity reduces Joule heating and enhances the number of nanotubes contributing to electron emission within the film. That is, the more the carbon nanotube film is densified, the better its field electron emission characteristics become.

Experimental results confirmed that the field electron emission characteristics significantly improved even when the carbon nanotube film was densified using only a polar solvent or an acidic aqueous solution. This demonstrates that both polar solvents and acidic aqueous solutions can effectively densify the carbon nanotube film. Furthermore, when the first densification was performed using a polar solvent and the second densification was carried out using an acidic aqueous solution, the field emission performance of the carbon nanotube film emitter improved remarkably compared with the cases where only one solvent or aqueous solution was used.

The foregoing description of the present invention is intended merely as illustrative, and it will be understood by those skilled in the art that various modifications and changes can be made without departing from the spirit or essential features of the invention. Accordingly, the above-described embodiments should be understood as exemplary and non-limiting in all respects. For example, the components described as being configured as a single unit may also be implemented in a distributed form, and conversely, components described as distributed may also be implemented in a combined form.

The scope of the present invention is defined by the claims set forth below rather than the foregoing detailed description, and all modifications or variations derived from the meaning and scope of the claims and their equivalents should be interpreted as being included within the scope of the present invention.

### Embodiments of the invention

The embodiments of the invention are identical to the best mode for carrying out the invention as described above.

## Claims

1. A method of manufacturing a densified carbon structure-based film, comprising:
a step of providing a carbon structure-based film; and
a step of densifying the carbon structure-based film by immersing the carbon structure-based film in a polar solvent and then in an acidic aqueous solution to obtain a densified carbon structure-based film, or immersing the carbon structure-based film in an acidic aqueous solution and then in a polar solvent to obtain a densified carbon structure-based film.

2. The method of claim 1,
wherein the carbon structure includes at least one selected from the group consisting of a carbon nanotube, graphene, nanocarbon, and carbon nanowire.

3. The method of claim 2,
wherein the carbon nanotube includes at least one selected from the group consisting of a single-walled carbon nanotube, a double-walled carbon nanotube, and a multi-walled carbon nanotube.

4. The method of claim 1,
wherein the polar solvent has a dipole moment of 2 D or more.

5. The method of claim 1,
wherein the polar solvent includes at least one selected from the group consisting of heteroaromatic compounds, ketones, carbonates, ethers, esters, acetonitrile, dimethyl sulfoxide (DMSO), N,N-dimethylformamide (DMF), N-methyl-2-pyrrolidone (NMP), N,N'-dimethylacetamide (DMAc), and hexamethylphosphoramide (HMPA).

6. The method of claim 1,
wherein the polar solvent includes at least one selected from the group consisting of pyridine, acetone, ethylene carbonate, propylene carbonate, tetrahydrofuran (THF), methyl acetate, ethyl acetate, acetonitrile, dimethyl sulfoxide (DMSO), N,N-dimethylformamide (DMF), N-methyl-2-pyrrolidone (NMP), N,N'-dimethylacetamide (DMAc), and hexamethylphosphoramide (HMPA).

7. The method of claim 1,
wherein the acidic aqueous solution includes at least one selected from the group consisting of hydrochloric acid, nitric acid, sulfuric acid, acetic acid, formic acid, salicylic acid, and benzoic acid.

8. The method of claim 1,
further comprising a pretreatment step for removing a dispersant.

9. The method of claim 8,
wherein the dispersant is removed by washing using at least one solvent selected from the group consisting of ketones, alcohols, and water.

10. The method of claim 1,
further comprising performing a heat treatment before, after, or both before and after the step of densifying the carbon structure-based film.

11. The method of claim 1,
further comprising a washing process in the step of densifying the carbon structure-based film.

12. A densified carbon structure-based film manufactured according to the method of manufacturing a densified carbon structure-based film comprising:
a step of providing a carbon structure-based film; and
a step of densifying the carbon structure-based film by immersing the carbon structure-based film in a polar solvent and then in an acidic aqueous solution to obtain a densified carbon structure-based film, or immersing the carbon structure-based film in an acidic aqueous solution and then in a polar solvent to obtain a densified carbon structure-based film.

13. A method of manufacturing a carbon structure-based electron emission source, comprising:
a step of providing a carbon structure-based film;
a step of densifying the carbon structure-based film by immersing the carbon structure-based film in a polar solvent and then in an acidic aqueous solution to obtain a densified carbon structure-based film, or immersing the carbon structure-based film in an acidic aqueous solution and then in a polar solvent to obtain a densified carbon structure-based film; and
a step of fixing the carbon structure-based film, which is disposed between at least two conductive metal members, by applying lateral pressure.

14. The method of claim 13,
further comprising cutting the carbon structure-based film before or after the step of densifying the carbon structure-based film.

15. An X-ray tube comprising:
a tube housing having an internal space;
a cathode accommodated within the tube housing and disposed at one end of the tube housing, the cathode having a linearly cut carbon structure-based film coupled thereto as an electron emission source;
a gate electrode disposed above the cathode and having a slit formed therein to align with the carbon structure-based film;
a focusing lens disposed above the gate electrode; and
an anode accommodated within the tube housing and disposed at the other end of the tube housing to face the cathode.

16. The X-ray tube of claim 15,
wherein the cathode comprises:
a densified carbon structure-based film; and
a conductive metal member for fixing the carbon structure-based film,
wherein the conductive metal member includes a recess formed to be recessed by a predetermined depth from an upper surface,
the recess having a depth equal to or greater than the height of the carbon structure-based film by a predetermined length, and
the carbon structure-based film is disposed across the recess.

17. The X-ray tube of claim 15,
wherein the cathode comprises:
a plurality of densified carbon structure-based films; and
a conductive metal member for fixing the carbon structure-based films,
wherein a plurality of recesses are recessed by a predetermined depth,
each recess having a depth equal to or greater than the height of the corresponding carbon structure-based film by a predetermined length, and
each of the carbon structure-based films is disposed across the respective recess.

18. The X-ray tube of claim 15,
wherein an opening of the focusing lens is formed in a curved shape or a rounded rectangular shape, and an outer peripheral surface of the focusing lens is formed in an elliptical, circular, or rounded rectangular shape.

19. The X-ray tube of claim 15,
wherein an upper surface of the focusing lens is formed as a flat surface or a curved surface,
and when the upper surface is formed as a curved surface, the height of the upper surface increases toward left and right end portions along a direction perpendicular to an extending direction of the carbon structure-based film.

20. The X-ray tube of claim 15,
wherein the anode is a fixed electrode or a rotating electrode.

21. The X-ray tube of claim 15,
wherein the cathode comprises:
a densified carbon structure-based film;
a first clamp and a second clamp extending along a longitudinal direction of the carbon structure-based film and respectively brought into close contact with both side surfaces of the carbon structure-based film to fix the film; and
a fastening member for coupling the first clamp and the second clamp.

22. The X-ray tube of claim 21,
wherein the cathode in which the first clamp, the second clamp, and the fastening member are coupled includes a flat upper surface and a recess recessed by a predetermined depth in the upper surface,
the recess having a depth equal to or greater than the height of the carbon structure-based film by a predetermined length.

23. The X-ray tube of claim 21,
wherein an inner surface of the second clamp, which contacts the first clamp, is provided with at least one protrusion projecting from the inner surface,
and an inner surface of the first clamp is provided with at least one receiving portion formed to accommodate the protrusion.

24. The X-ray tube of claim 23,
wherein the second clamp includes a first protrusion formed at one lower corner of the inner surface and a second protrusion formed at the other lower corner of the inner surface,
and the first clamp includes a first receiving portion formed to accommodate the first protrusion and a second receiving portion formed to accommodate the second protrusion.

25. The X-ray tube of claim 21,
wherein the inner surface of the second clamp, which contacts the first clamp, is provided with a protrusion projecting from the inner surface,
the first clamp is coupled to a space formed at an upper end of the protrusion, and
the protrusion extends along a lower end portion of the inner surface of the second clamp in its longitudinal direction by a predetermined length.

26. The X-ray tube of claim 21,
wherein fastening grooves respectively penetrating bodies of the first clamp and the second clamp are formed,
the fastening member being coupled to the respective fastening grooves,
and the fastening grooves are formed below regions where the carbon structure-based film is brought into close contact with the first clamp and the second clamp.

27. The X-ray tube of claim 15,
wherein the anode is coupled to one end of the tube housing,
and further comprises a first adapter ring coupled between the anode and the tube housing,
wherein the anode is made of a copper-based material,
the tube housing is made of a ceramic material,
the first adapter ring is made of a material having a thermal expansion coefficient corresponding to that of the tube housing,
and the anode and the first adapter ring, and the first adapter ring and the tube housing are brazed to each other respectively.

28. The X-ray tube of claim 15,
further comprising a bottom surface made of a ceramic material and formed to cover an opening at the other end of the tube housing and to support the cathode,
and a second adapter ring coupled between the bottom surface and the tube housing,
wherein the bottom surface and the second adapter ring, and the second adapter ring and the tube housing are brazed to each other respectively.

29. The X-ray tube of claim 28,
wherein the cathode, the gate electrode, and the focusing lens are disposed on the bottom surface,
the gate electrode is formed in a bridge shape with a body supported by supporting portions at both ends, each supporting portion being coupled to the bottom surface,
the focusing lens is formed in a bridge shape disposed above the gate electrode with a body supported by supporting portions at both ends, each supporting portion being coupled to the bottom surface,
and the carbon structure-based film, a slit of the gate electrode, and an opening of the focusing lens are aligned with one another,
while a virtual line connecting the supporting portions of the gate electrode and a virtual line connecting the supporting portions of the focusing lens are arranged to intersect each other.

30. The X-ray tube of claim 15,
further comprising a bottom surface formed to cover an opening at the other end of the tube housing and to support the cathode,
wherein the bottom surface is made of a metal material,
and the bottom surface and the tube housing are brazed to each other.

31. The X-ray tube of claim 30,
further comprising a substrate disposed on an upper surface of the bottom surface, on which the cathode, the gate electrode, and the focusing lens are disposed,
wherein the gate electrode is formed in a bridge shape with a body supported by supporting portions at both ends, each supporting portion being coupled to the substrate,
the focusing lens is formed in a bridge shape disposed above the gate electrode with a body supported by supporting portions at both ends, each supporting portion being coupled to the substrate,
and the carbon structure-based film, a slit of the gate electrode, and an opening of the focusing lens are aligned with one another,
while a virtual line connecting the supporting portions of the gate electrode and a virtual line connecting the supporting portions of the focusing lens are arranged to intersect each other.

32. The X-ray tube of claim 15,
further comprising a plurality of electrode pins configured to respectively apply voltages to the cathode, the gate electrode, and the focusing lens,
wherein each of the electrode pins has a threaded end so as to be screw-coupled to the cathode, the gate electrode, or the focusing lens.
